# EUROPEAN PATENT SPECIFICATION

(11) **EP 0 555 908 B1**
(45) Date of publication and mention of the grant of the patent: **17.07.1996**
(21) Application number: 93200269.4
(22) Date of filing: 03.02.1993
(51) Int. Cl.: B21D 5/02, B25J 9/16

(54) **Folding robot**
Faltroboter
Robot de pliage

(30) Priority: 14.02.1992 BE 9200159
(43) Date of publication of application: 18.08.1993
(73) Proprietor: L.V.D. COMPANY N.V., B-8560 Wevelgem (BE)
(72) Inventor: Serruys, Wim, B-8560 Moorsele (BE)
(74) Representative: Leherte, Georges, Dr.

(56) References cited:
- EP-A- 0 110 655
- BE-A- 904 504
- GB-A- 2 211 002
- PATENT ABSTRACTS OF JAPAN vol. 7, no. 183 (M-235)(1328) 12 August 1983 & JP-A-58 84 616 (AMADA) 20 May 1983

## Description

The invention relates to a method for controlling a programmable folding robot for automatically folding sheet-type items, said robot having at least one device for holding a sheet-type item, and said device being positionable by means of various adjustable movement schafts,
- in which the drive units of said movement shafts are separately controlled in order to grip the flapping-up part of a sheet-type item, so that it cannot shift, and to follow it in a supporting way during the folding of this item,
- and in which said control is achieved, according to the principal of path control, by measuring the position of the folding tools continuously during the folding, in order to synchronise the movements of the device with the movements of the folding tools by means of a control algorithm,
The invention also relates to a programmable folding robot for automatically folding sheet-type items using the above described method comprising,
- at least one device for holding a sheet-type item, said device being positionable by means of various movement shafts.
- a programmable part being provided with a first control algorithm for controlling the drive units of said movement shafts, in order to make the device pick up a sheet-type item at a predetermined place, to position it relative to folding tools, and to deposit the finished item at a predetermined place; said programmable part also being provided with a path control algorithm for controlling said drive units, in order to make the device follow and support the flapping-up part of the item without reference loss during the folding,
- and means for measuring the position of the folding tools continuously during the folding, and for feeding the measured values back to the path control algorithm, in order to synchronise the movements of the device with the movements of the folding tools.

Known devices for automatically folding sheet-type items (folding machines) are equipped with folding tools, for example a slat-shaped die and complementary punch of the same length which can be moved towards and away from said die. The folding is carried out by positioning the sheet between the die and the punch, following which the punch presses the sheet locally into the die, thus forming the fold. Since the sheet is folded at the place which is at the level of the die and the punch, correct positioning of the sheet relative to the folding tools is a prerequisite for folding the sheet at the correct place.

For correct positioning of a sheet relative to the folding tools, known devices are provided with a rear stop or equivalent device, against which the sheet can be positioned before the folding is started. This rear stop or equivalent device lies at a well-defined, adjustable distance away from the folding tools. The position of the fold which will be formed in the sheet is consequently determined by setting the rear stop at a well-defined distance relative to the folding tools.

In the simplest machines the rear stop is set manually by the operator of the folding machine. The operator subsequently takes a sheet and positions it by feel against the rear stop. He then starts the folding machine, but continues to hold the sheet until he feels that the sheet is clamped between the folding tools. Only then does he let go of the sheet, which is folded further by the folding machine.

However, if the sheet to be folded is thin and/or long, the part of the sheet flapping up will also have to be supported during the folding, in order to prevent said sheet from bending. In the case of the simplest machines the operator also has to do this supporting.

In the more advanced folding machines the rear stop is numerically controlled and takes up the pre-programmed positions automatically. The operator merely has to place the sheet against the rear stop and possibly follow it during the folding and manipulate the sheet between two successive folding operations.

Some machines are also provided with a sheet follower device at the front of the machine. Such a device continues to support the sheet during the folding. The operator still has to manipulate the sheet in order to place it ready for the first and all subsequent folds, and to remove it after the last fold.

In order to increase the efficiency (speed and accuracy) of the folding machines, machines which ruled out the necessity for the intervention of an operator were developed. These fully automated folding machines are equipped with a programmable robot to replace the operator, and with a supply and discharge device for the supply and discharge of the sheets. In other words, the robot is capable of carrying out the following "actions": taking a sheet from the supply device, positioning the sheet against the automatically set rear stop, manipulating the sheet between two successive folds, and putting away the fully folded sheet on the discharge device.

The present invention relates more particularly to such a programmable robot for a device for automatically folding sheets, hereinafter called a "folding robot".

The known "folding robots" can be sub-divided into two groups: the folding robots equipped with suction cups, and the folding robots equipped with a gripper, for taking hold of a sheet.

In the case of the robots equipped with suction cups the sheet is held by a set of suction cups. The sheet is aligned by pushing it against the rear stop, in which case the suction cups slide over the sheet. During the folding the suction cups make the same movement as the sheet. However, the suction cups can shift, so that the reference is lost. The robot must therefore re-align the sheet against the rear stop for each fold. This is a great disadvantage, since time is lost aligning the sheet before each fold, and since a rear stop or equivalent remains indispensable.

In the case of the robots which are provided with a gripper, a first type is known in which the sheet is clamped in the gripper. The gripper thus cannot slide over the sheet as in the case of suction cups. The rear stop is therefore not a fixed stop, but consists of two measuring pins against which the sheet is pressed. The value measured at the two measuring pins then indicates the extent to which the sheet is wrongly positioned. This is then compensated for by the robot until the measuring pins detect no further deviation relative to the desired value. At that moment the sheet is aligned. Only then can the folding machine begin to fold the sheet. When the sheet is clamped between the tools in the folding machine, the gripper is opened. The gripper follows the movement of the sheet while it remains open. When the fold is made, the gripper is closed and the sheet clamped again. However, the alignment is lost by opening the gripper. The robot then manipulates the sheet in such a way that the sheet is in the correct orientation for realignment against the rear stop. Here again, there is thus the disadvantage of the sheet having to be realigned against the measuring pins before each fold.

A disadvantage of the abovementioned known folding robots thus lies in the fact that during the folding movement the reference of the sheet is lost through the fact that the suction cups shift or the grippers have to be opened.

A second type of fully automated and programmable folding robot is described in European patent application n° 0 110 655, which is considered to represent the most relevant state of the art for the present invention.

This robot comprises the features, mentioned in the second paragraph of this description. Control of this robot is achieved through the method described in the first paragraph of the description. So, the folding of a plate can be performed with a gripper continuously holding the sheet-type item.

The advantage thereof is that during the folding the grippers remain closed, so that after the folding movement the control still knows the position of the grippers relative to the workpiece, with the result that the correct position of the sheet remains known, and realignment of said sheet for good positioning with respect to the place of the following fold is not necessary.

However the path which the end of the sheet follows (where the gripper is gripping the sheet) can show a deviation relative to the theoretical model during the folding, as a result of deviations in the sheet thickness and/or the material properties. In this case the path of the end of the sheet consequently will not correspond to the path of the gripper, and the sheet will either be pulled out of the folding tools, or the gripper will shift relative to the sheet, with the result that the reference for the following fold is lost.

An object of this invention is to provide a method for controlling a programmable folding robot, which eliminates the abovementioned disadvantages.

This object has been achieved by a method, as described in the second paragraph of this description, in which said control is also achieved by active compliance during the folding, at least one force and/or at least one moment placing a load on the device being measured, while this (these) measured value(s) is (are) fed back to the programmable part, where a suitable algorithm adjusts one or more drive units in order to remove the measured load.

A further object of this invention is to provide a programmable folding robot, which does not show the abovementioned disadvantages.

This object has been achieved by providing a programmable folding robot, with the features mentioned in the first paragraph of this description, and having a programmable part, provided with an active compliance algorithm for adjusting one or more drive units in order to remove a measured load on the device, whereas the folding robot is provided with means for measuring at least one force and/or at least one moment placing a load on the device, and for feeding this (these) value(s) back to the active compliance algorithm.

A subject of the invention is a programmable folding robot of a device for automatically folding sheets, which can be controlled in such a way that it carries out the following "actions" fully automatically, without the intervention of an operator, in a continuous, constantly repeating cycle:
1. provide itself with a suitable gripper;
2. grip a sheet in a reference post;
3. independently align said sheet in the reference post relative to the folding robot;
4. position the sheet between the tools of the folding machine, at a pre-programmed position;
5. follow the moving sheet during folding, without the device holding the sheet (e.g. the gripper) letting go of the sheet;
6. manipulate the sheet in order to place it ready for the next fold.

Actions 4, 5 and 6 are subsequently repeated as often as necessary to fold the sheet completely.
7. deliver the finished product at a pre-programmed place to the discharge machine; (opening of the gripper), actions 1 to 7 being repeated as many times as sheets have to be folded.

A second subject of the invention is a fully automatic programmable device for folding sheets, equipped with a folding robot according to the invention, a folding machine with reference post, and a supply and discharge device for the sheets, these three machines being programmable so that they interact, in order to have the sheets fed in continuously by the supply machine folded in succession by the folding machine, through the intervention of the folding robot, and to have the finished sheets discharged.

Another subject of the invention is the method for fully automatically folding sheets, which is characterised in that a folding robot is programmed to run through the above-described cycle (actions 1 to 7), the term "method" also being used to denote the succession of machine instructions used for it, more specifically as they are drawn up in the form of a computer program or algorithm and stored on a data carrier or otherwise, and fed into the programmable machines in order to execute the abovementioned method.

The folding robot according to the invention is set up in the vicinity of the folding machine, preferably along its front side, and is preferably fixed to the folding machine.

The folding robot according to the invention essentially consists of a swing arm which can rotate in a vertical plane relative to one of its ends by which it is fixed on a carriage, while said carriage can move linearly (in a horizontal plane), parallel to the direction in which the folding tools extend, and a carriage which is movable in the lengthwise direction of the swing arm is disposed on said swing arm, on which carriage a wrist joint which permits rotations about two axes lying perpendicular to each other is disposed, while a force sensor is provided at the outlet of the wrist joint, on which sensor a gripper or other seizing device is mounted, for picking up a sheet and depositing it again.

Each of the abovementioned movement mechanisms can be driven and controlled separately. By driving each of the abovementioned mechanisms, the gripper can be moved through five main movement axes in the space in the vicinity of the folding machine, in order to carry out the abovementioned actions for folding a sheet. In order to be able to describe the robot, a cartesian coordinates system is first defined on the folding machine, the Z-axis extending in the direction in which the folding tools extend, the Y-axis in the direction of movement of said tools, and the X-axis lying perpendicular to the axes Y and Z.

The abovementioned five main axes of movement according to which the gripper, and thus the sheet, can be moved are as follows:
1. The Z-axis, parallel to the tools, according to the straight line of movement of the carriage on which the swing arm is fitted;
2. The α-axis, the axis of rotation of the swing arm, parallel to the Z-axis;
3. The U-axis, parallel to the longitudinal axis of the swing arm, according to the straight line of movement of the carriage on the swing arm;
4. The β-axis, parallel to the Z-axis, on the carriage provided on the swing arm, at the level of the wrist joint, the first axis of rotation of the wrist joint;
5. The Φ-axis, perpendicular to the U-axis and to the β-axis, on the carriage on the Z-axis, at the level of the wrist joint, the second axis of rotation of the wrist joint.

The carriage on which the swing arm is fixed can be moved along the Z-axis by means of guide and drive means. The movement of said carriage causes a translation of the complete robot, and thus also of the gripper which is holding the sheet, along the Z-axis.

The swing arm itself can be rotated relative to the α-axis by a separate drive unit. The carriage which is movable on the swing arm can move in a straight line in the lengthwise direction of the swing arm, and is provided with a guide and drive unit. The movement of this carriage is thus along the U-axis.

The carriage on the swing arm is provided with a wrist joint, which permits a rotation about an axis parallel to the Z-axis, called the β-axis, and about an axis which is perpendicular to the β-axis and is on the U-axis, called the Φ-axis. These two rotary movements can also be controlled and driven separately by means of drive units. The gripper is disposed at the outlet of this wrist joint. The force sensor is situated between wrist joint and gripper.

In order to make the gripper carry out the desired positionings and manoeuvres for taking, folding, manipulating and depositing the sheet, the drive units of the folding robot must, of course, be controlled. This is carried out by a combination of three different control principles:
1. Positioning the gripper in the space in cartesian coordinates, defined by a position (X, Y, Z) and an orientation in the space (β, Φ);
2. Controlling the path of the gripper in synchronism with the movement of the folding tools;
3. Controlling with force feedback.

The first control principle is called positioning and takes place by means of a control algorithm fed into a programmable device of the folding robot. Programming of the robot (input of the desired coordinates) enables the robot to position the gripper, with the sheet therein, and to guide it according to the coordinates entered, to grip this sheet at a known place, to position the sheet between the tools with great accuracy, and to deposit the finished sheet at a pre-programmed place.

The second control principle - controlling the path of the gripper in synchronism with the movement of the folding tools - enables the gripper of the robot to follow the sheet during the folding. For this, the position of the tools is measured continuously in order to ensure perfect synchronisation of the movements with the movements of the tools.

More specifically, the movements of the α-axis, U-axis and β-axis must be perfectly synchronised with the position and speed of the tools. The connection between the kinematics of the α-axis, U-axis and β-axis as a function of the kinematics of the tools, tool shape and sheet measurements is scientifically fixed in a theoretical model.

In order to avoid a following error occurring between the imposed path and the paths actually followed, a speed and acceleration feed forward is built into the control algorithm, or the control can also be according to the principle of state space.

The third method of control - with force feedback - is made possible by the force sensor. This force sensor is situated at the outlet of the wrist joint and has a flexibility along the U-axis and the Z-axis (translations) and along the Φ-axis (rotation). The force, or the moment, is measured if there is a load according to one of the three flexibilities. On the basis of these measurements, the respective deviations are fed back to the control. The control then rectifies the deviations through adjustment, by means of a suitable algorithm which acts upon the axes along which deviations are measured. It is consequently a matter of active compliance.

This method of control is necessary to avoid a reference loss due to a deviation of the path of the flapping-up part of the sheet relative to the theoretical path.

The measurement of two forces and a moment along the axes Z, U and Φ also makes it possible by means of a suitable algorithm with force feedback to align a sheet against a fixed stop in the reference post, or to align the sheet while it is still in the folding machine (when the gripper has to take hold of the sheet again, in order to ensure that the next fold is not prevented).

The gripper or other device for taking hold of a sheet is fitted on top of the force sensor. Where a gripper is used, it may be necessary to provide different shapes of grippers. This gripper, or a part thereof, is fixed in such a way that it can be changed very quickly and automatically by the robot itself. The spare parts in that case lie in the reference post, at a pre-programmed place.

Further advantages and features of the folding robot according to the invention, of the folding device with folding robot according to the invention, and of the method for folding sheets according to the invention are illustrated with reference to the detailed description which follows of a preferred embodiment of the subjects of the invention, without the invention being thereby restricted to this embodiment alone.

This description is illustrated with reference to the appended drawings, in which:
Figure 1a shows a front view of a folding machine with folding robot, in a preferred embodiment according to the invention;
Figure 1b shows a side view of a folding machine with folding robot according to the invention;
Figure 2 shows a side view of the folding robot according to the invention;
Figure 3 shows a side view of the detached swing arm with the carriage with the gripper thereon;
Figure 4 shows a side view of the carriage, provided with the gripper;
Figure 5 shows a top view of the carriage, provided with the gripper;
Figure 6 shows a perspective view of the force sensor;
Figure 7a shows a side view of a gripper of the folding robot;
Figures 7b, 7c and 7d show side views of grippers of the folding robot, a different clamping piece being provided in each case.

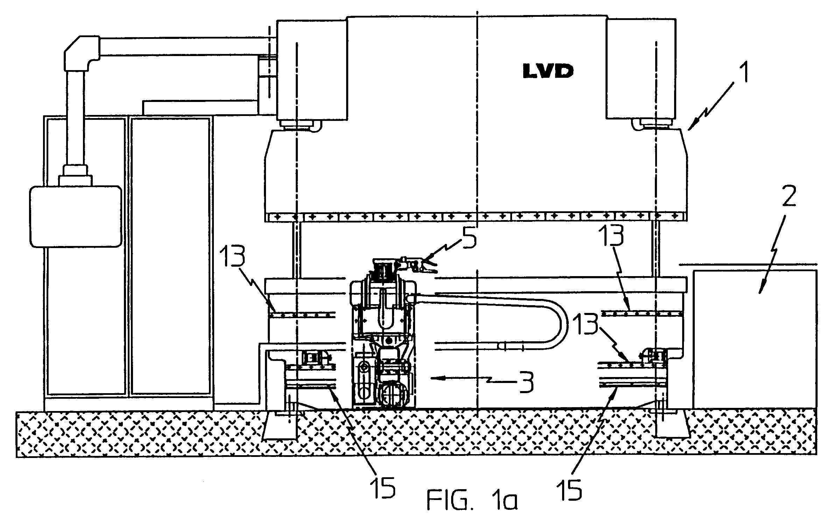

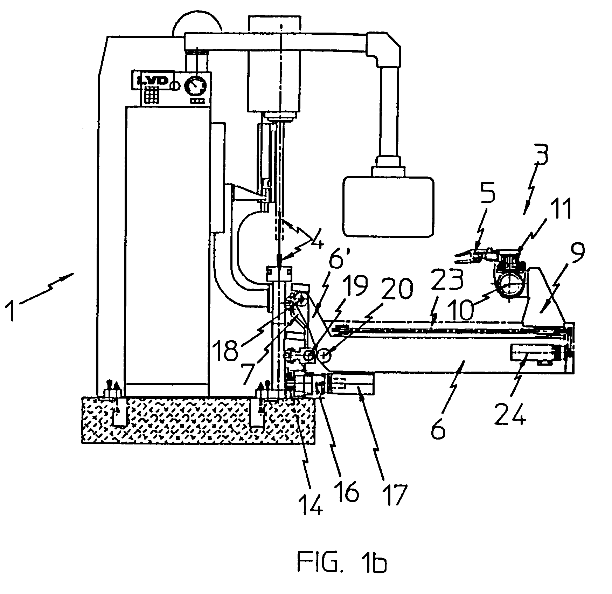

In the preferred embodiment of a folding machine equipped with a folding robot according to this invention (see Figures 1a and 1b) a folding robot (3) is fixed along the front of a known folding machine.

This folding robot (3) can move laterally through the fact that it is disposed on a carriage (7) which is movable on guide means, the drive device of which carriage can be controlled.

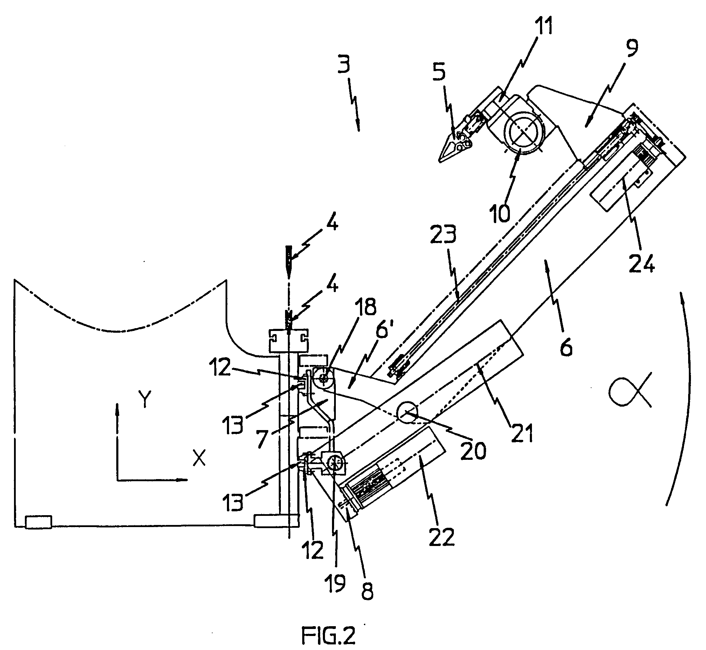

For its drive and guidance, this carriage is disposed on the slippers (12) (see Figure 2) of the guides (13), which are fixed at the front of the folding machine, upstream of the folding tools (4). These guides (13) extend horizontally, parallel to the lengthwise direction of the folding tools (4).

The drive of the carriage (7) (see Figs. 1a and 1b) is by means of a gear wheel (14) which meshes with a toothed bar (15) fixed on the front of the folding machine (1). The gear wheel (14) is driven by a servomotor (17) by means of a reduction gearbox (16).

The axis along which the carriage (7) moves is called the Z-axis.

The swing arm (6) is fixed on the carriage (7) (see Fig. 2) by means of the shaft (18). An angle-forming ending part (6') of the swing arm (6) is fixed on the top of the carriage (7) so that it is rotatable at the end by means of the shaft (18), the angle-forming part (6') extending upwards when the swing arm (6) is in the horizontal position.

The shaft (20) which forms part of the drive unit (8) of the swing arm (6) is fixed rotatably at the bottom side of the swing arm (6) - in the angle formed by the swing arm (6) itself and its angle-forming part (6'). Another shaft (19), forming part of the drive unit (8), is fixed rotatably at the bottom of the carriage (7).

The shaft (19) is fixed immovably, and the shaft (20) is fixed movably in the drive unit (8). The shaft (20) can be driven by means of a screw-nut combination in order to move in a linear movement along a straight line intersecting the shafts (19) and (20), either away from the shaft (19), or towards said shaft (19). Through this movement of the shaft (20) relative to the shaft (19), the swing arm (6) turns in the point of rotation of the shaft (18), and the swing arm (6) can rotate in a vertical plane.

The axis (18) about which the swing arm (6) is rotatably disposed is called the α-axis. For the drive of this device the screw of the screw-nut combination is driven by a servomotor (22) by way of a toothed belt.

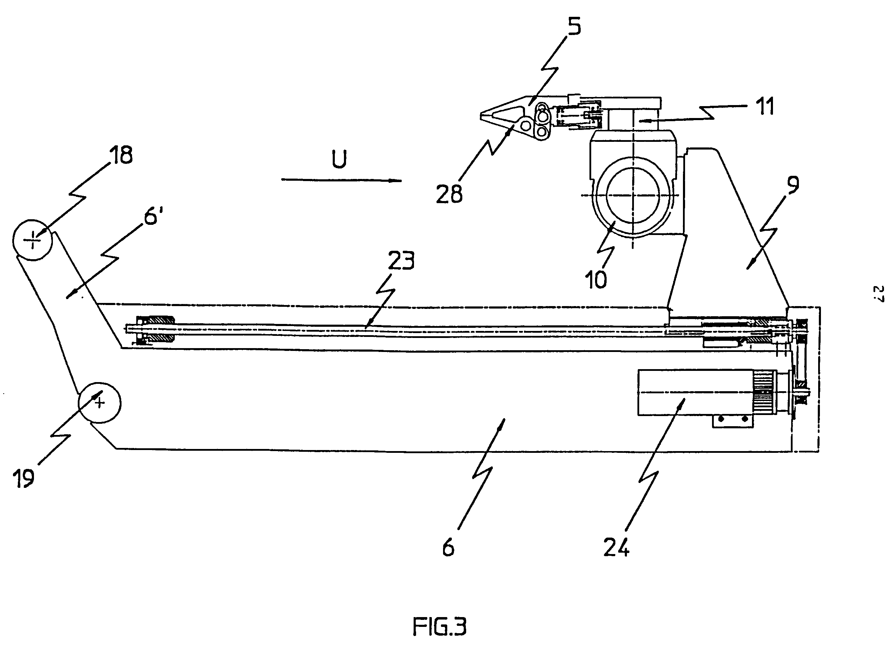

The carriage (9), which can move on the swing arm (6) (see Fig. 3), is also driven by means of a screw-nut combination (23), which is in turn driven by a servomotor (24) by way of a toothed belt. This carriage (9) can move over the entire length of the straight part of the swing arm (6). This axis of movement is called the U-axis. In the horizontal position of the swing arm (6) the U-axis runs parallel to the X-axis.

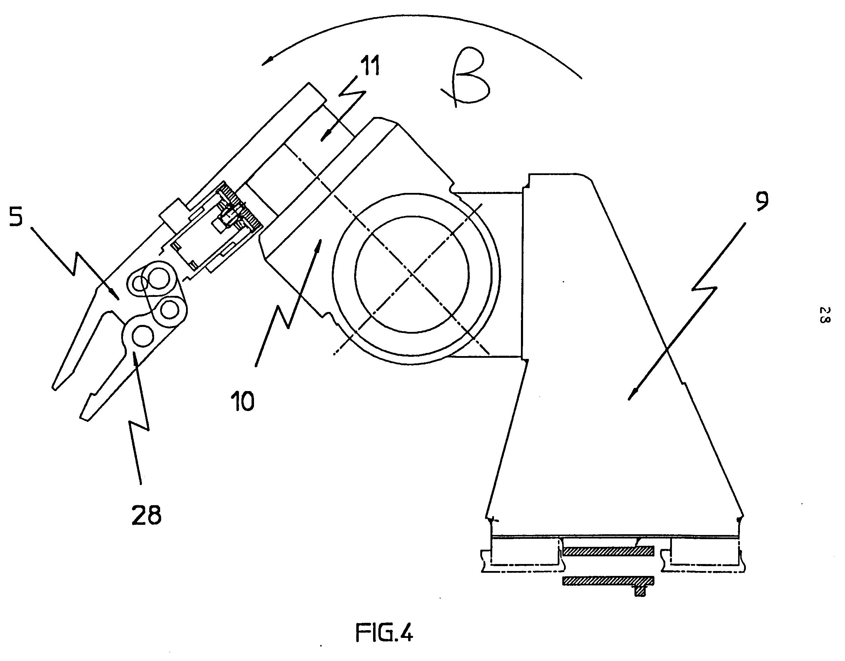

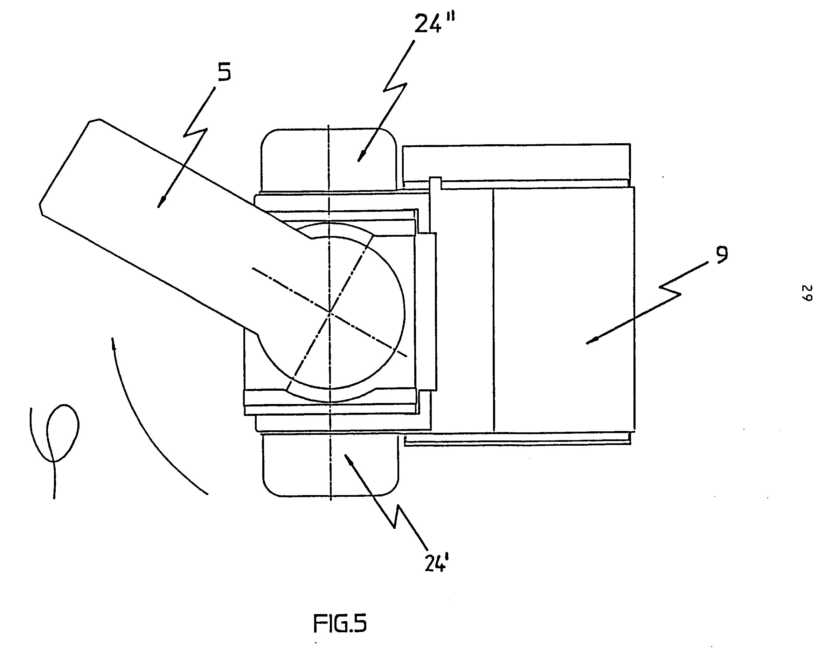

The wrist joint (10) is disposed on top of the carriage (9) (see Figures 3, 4 and 5). This wrist joint (10) permits rotations about two axes lying at right angles to each other. The first rotation is a rotation about an axis parallel to the Z-axis, called the β-axis. The gripper, which can be moved by means of this wrist joint (10) relative to the carriage (9), through this first rotation can swing about the β-axis, which is perpendicular to the lengthwise direction of the swing arm (6). In the horizontal position of the swing arm (6) this swinging means an upward and downward movement of the gripper (5), remaining in the same vertical plane.

The second rotation which the wrist joint (10) permits is a rotation about an axis perpendicular to the U-axis and to the β-axis. This axis is called the Φ-axis. The movement about the Φ-axis is called turning.

The gripper (5), which is at the outlet of this wrist joint (10), can consequently revolve. When the swing arm (6) is horizontal and the gripper (5) is swung into the horizontal position relative to the carriage (9), the gripper (5), through the turning, can be rotated about the vertical Φ-axis, remaining in the same horizontal plane.

The wrist joint (10) is constructed as a differential mechanism, and is driven by two independent servomotors (24') and (24''), which permit swinging and turning respectively of the gripper (5).

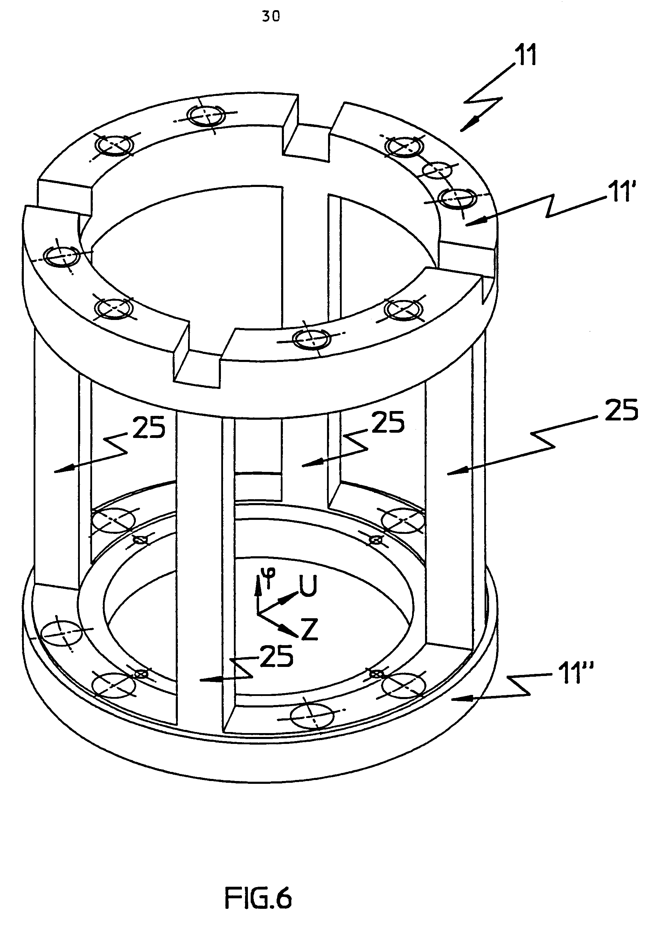

A force sensor (11) is fitted at the outlet of the wrist joint (10) (see Fig. 6). This force sensor (11) is symmetrical in shape and comprises a top part (11') and a bottom part (11''), which is annular with rectangular cross-sections, while said top and bottom part (11', 11'') are disposed vertically above each other, parallel to each other, and are connected to each other by means of four bar-shaped parts (25) of the same length, which connect symmetrically and at equal distances from each other at right angles to the annular parts (11', 11'').

These bar-shaped parts (25) are made of flexible material.

The bottom annular part (11'') is securely fixed to the wrist joint (10), while the top annular part (11') is securely fixed to the gripper (5).

The gripper (5) in this way has a flexibility relative to the wrist joint (10) along three of the axes of movement: the Z-axis parallel to the folding tools, the U-axis in the lengthwise direction of the swing arm (6), and the Φ-axis at right angles to the U-axis and the β-axis, about which the gripper (5) can turn. The forces and the moment are measured by means of strain gauges which are fixed on the vertical sides (25) of the force sensor (11).

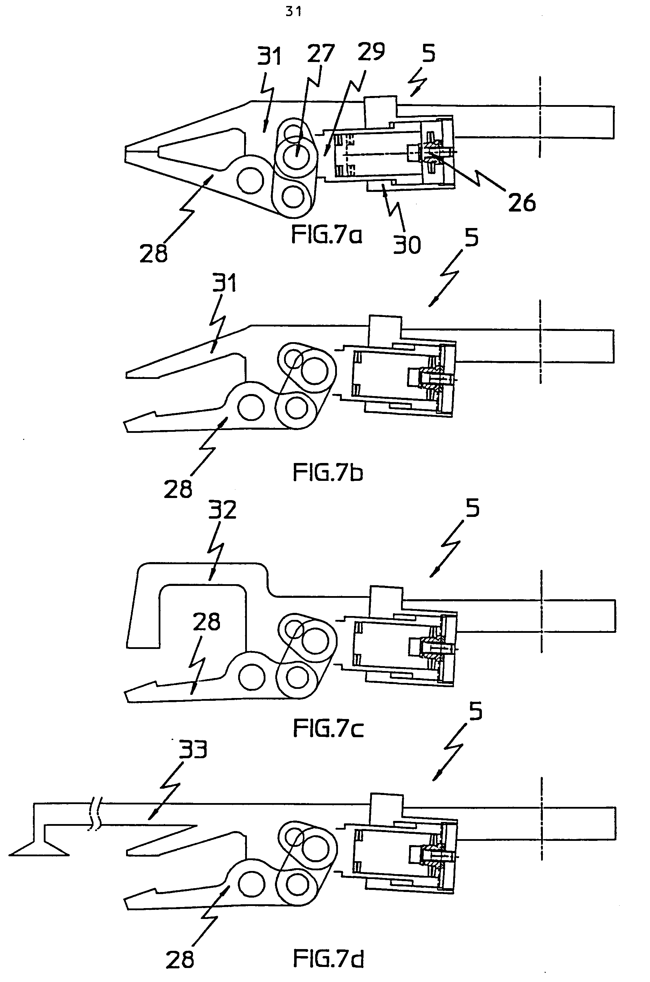

The gripper (5) is fitted on the top annular part (11') of the force sensor (11) (see Figs. 7a to 7d). The gripper (5) is opened by means of springs (26) which by means of a knee joint (27) press the lower jaw (28) of the gripper (5) against the top part (31), (32), (33), called the clamping piece (31), (32), (33) below. The gripper (5) is opened by the pressure which acts on the piston (29) of the hydraulic cylinder (30). The clamping piece (31), (32), (33) is exchangeable. The robot is capable itself of fetching the most suitable clamping piece from a store and fixing it on the gripper (5). This store with clamping pieces (31), (32), (33) lies in the reference post (2).

The most necessary clamping pieces (31), (32), (33) are shown, inter alia, in Figures 7a to 7d. The clamping piece (31) (Figs. 7a and 7b) of limited height, in order to be able to fold sharply and closely against the tools (4). The clamping piece (32) which is U-shaped, in order to be able to grip the sheet over a folded border. The clamping piece (33) with extension piece and suction cup, in order to support weak sheets.

The folding robot according to the invention is connected to a programmable device. The automatic control of the folding robot is obtained by entering data and a control algorithm in this programmable device.

First of all, the folding robot must be able to grip the sheet to be folded, position it with great accuracy between the tools, and deposit the finished sheet at a pre-programmed place.

The sheet is gripped either in the reference post (2) or while the sheet is clamped between the folding tools (4).

For this, the coordinates (coordinates from the cartesian coordinate system of the folding machine (1), the so-called world coordinate system) corresponding to the actions to be carried out by the folding robot are entered. The control then calculates in real time the coordinate transformation from the world coordinate system to the robot coordinate system. The robot is thus programmed directly in world coordinates. The advantage of this is that it is much easier to imagine which points correspond to the X, Y, Z coordinates entered than would be the case with the robot coordinates U, Φ, β, α, Z.

The folding robot must also be able to follow the sheet during the folding, without the gripper (5) having to be opened. The position of the folding tools (4) is measured continuously, and the robot coordinates are calculated from this in real time. More specifically, it is the movements along the α-axis, the U-axis and the β-axis which have to be perfectly synchronised with the position and the speed of the tools (4), in order to permit perfect synchronisation between the movement of the tools (4) and the movements of the robot. The path which the robot has to follow is, however, also a function of the shape of the tool and the dimensions of the sheet to be folded. The connection between the kinematics of the α-axis, U-axis and β-axis as a function of the kinematics of the tools (4), tool shape and the sheet dimensions is established scientifically in a theoretical model. The values are calculated in real time during the following of the sheet when the folding is being carried out.

In order to prevent a following error from occurring between the imposed path and the path actually followed, a speed and acceleration feed forward is built into the control algorithm. The control can also be carried out according to the principle of state space.

The abovementioned theoretical model is sometimes departed from due to deviations in the sheet measurements and in the properties of the material. In order to prevent the gripper from sliding relative to the sheet and the reference being lost as a result of this, the gripper (5) is first placed on a flexibility which permits a deviation in the U-direction. This flexibility is supplied by the force sensor (11) and is inherent in its construction. This force sensor (11) also measures the deviation along the U-axis, and this measured value is fed back to the control, which then adjusts the movement along the U-axis in such a way that the measured deviation is corrected.

The force sensor (11) measures the deviations along the U-axis, the Z-axis and the rotation about the Φ-axis. This makes it possible to align a sheet against a fixed stop by means of a suitable algorithm with force feedback. This takes place in the reference post (2). This fixed stop is composed of three stop points. Alignment by means of the force sensor (11) while the sheet is clamped between the folding tools is also possible.

A folding machine equipped with a folding robot according to the invention is characterised in that it comprises three machines which have to interact: the folding machine (1) with reference post (2), the folding robot (3), the supply and discharge machine. The reference post (2) is a surface where the sheet to be folded must be laid ready for taking by the folding robot (3). The reference post (2) is fixed to the folding machine (1) at a place known by the robot (3). The clamping pieces (31), (32), (33) for the gripper (5) are also situated at the reference post (2).

The supply is limited to the supplying of a sheet to be folded, from a stack of sheets, to the reference post (2), and the discharge machine takes the folded item from the folding robot (3) and then deposits it at the place for the finished items. The same machine carries out the supply and discharge.

The method for folding sheets making use of a programmable folding robot according to the invention is also a subject of this invention, as are all the necessary control algorithms and programs which make the working of a folding robot possible by the method according to the invention.

A great advantage of the folding robot according to the invention lies in the fact that the folding robot is capable of following the sheet with active compliance during the folding, with the result that the gripper can remain closed during the folding. This means that it is not necessary to have a rear stop on the folding machine or make use of sensors outside the robot.

The essential combination from which the advantages of this invention arise is:
- the fact that the robot is equipped with a force sensor which provides a flexibility;
- the control of the robot without following errors in the synchronisation with the movement of the tools of the folding machine;
- control with force feedback.

Another essential advantage of the folding robot according to the invention lies in its kinematic construction. This construction makes it possible to use the same type of robot for all sheet sizes. This is so because these kinematics are extremely close to the movement which the sheet makes during the folding.

## Claims

1. Method for controlling a programmable folding robot for automatically folding sheet-type items, said robot having at least one device (5) for holding a sheet-type item, and said device (5) being positionable by means of various adjustable movement schafts,
- in which the drive units of said movement shafts are separately controlled in order to grip the flapping-up part of a sheet-type item, so that it cannot shift, and to follow it in a supporting way during the folding of this item.
- and in which said control is achieved, according to the principal of path control, by measuring the position of the folding tools (4) continuously during the folding, in order to synchronise the movements of the device (5) with the movements of the folding tools (4) by means of a control algorithm,
characterised in that said control is also achieved by active compliance during the folding, at least one force and/or at least one moment placing a load on the device (5) being measured, while this (these) measured value(s) is (are) fed back to the programmable part, where a suitable algorithm adjusts one or more drive units in order to remove the measured load.

2. Method according to Claim 1, characterised in that at least one translation and/or at least one rotation is permitted at the level of the device (5) without movement of one of the movement shafts, by providing a flexibility at the level of the device (5), while the force(s) or moment(s) causing this (these) translation(s) or rotation(s) is (are) measured, in order to feed these measured values back to the programmable part of the folding robot.

3. Method according to one or more of the preceding claims, characterised in that two forces and one moment are measured.

4. Method according to one or more of the preceding claims, characterised in that the control algorithm for the path control is based on a theoretical connection between the kinematics of one or more movement shafts and the kinematics of the folding tools (4) and/or the tool shape, and/or the sheet dimensions of the item to be folded.

5. Method according to one or more of the preceding claims, characterised in that a speed and acceleration feed forward is built into the control algorithm for the path control, or control is according to the principle of state space, in order to avoid a following error occurring between the theoretically imposed path and the path actually followed by the device (5) during the folding.

6. Programmable folding robot for automatically folding sheet-type items, using the method according to one or more of claims 1 to 5 comprising,
- at least one device (5) for holding a sheet-type item, said device (5) being positionable by means of various movement shafts,
- a programmable part being provided with a first control algorithm for controlling the drive units of said movement shafts, in order to make the device (5) pick up a sheet-type item at a predetermined place, to position it relative to folding tools (4), and to deposit the finished item at a predetermined place; said programmable part also being provided with a path control algorithm for controlling said drive units, in order to make the device (5) follow and support the flapping-up part of the item without reference loss during the folding,
- and means for measuring the position of the folding tools (4) continuously during the folding, and for feeding the measured values back to the path control algorithm, in order to synchronise the movements of the device (5) with the movements of the folding tools (4)
Characterised in that the programmable part is provided with an active compliance algorithm for adjusting one or more drive units in order to remove a measured load on the device (5), and that the folding robot is provided with means for measuring at least one force and/or at least one moment placing a load on the device (5), and for feeding this (these) value(s) back to the active compliance algorithm.

7. Programmable folding robot for automatically folding sheet-type items according to Claim 6, characterised in that the device (5) has a flexibility or is situated on an element (11) which has a flexibility, by which a translation of the device (5) in at least one direction and/or a rotation at least about one axis is permitted relative to the other parts of the programmable folding robot, and in that the device (5) or the element (11) is provided with means for measuring the force(s) and/or moment(s) which cause the abovementioned translation(s) and/or rotation(s), and with means for feeding these measured values back to the programmable part.

8. Programmable folding robot for automatically folding sheet-type items according to Claim 6 or 7, characterised in that the device (5) for gripping a sheet-type item is connected by means of a force sensor (11) to the outlet of the last movement shaft, in that said force sensor (11), through its inherent flexibility, permits a translation of the device (5) relative to the outlet of the last movement shaft in two directions at right angles to each other (U-axis and Z-axis), and in that said force sensor, through its inherent flexibility, permits a rotation of the device (5) relative to the outlet of the last movement shaft about an axis (Φ) at right angles to the plane of the abovementioned directions.

9. Programmable folding robot for automatically folding sheet-type items according to one or more of Claims 6, 7 and 8, characterised in that the force sensor (11) comprises a top annular part (11') and a bottom annular part (11'') connected to each other in a parallel position one above the other by means of elongated vertical parts (25), made of flexible material, and in that the bottom annular part (11'') is securely fixed to the outgoing part of the last movement shaft (10), while the top part (11') is securely fixed to the device (5), and strain gauges are fixed on the vertical parts (25), for measuring forces in two directions at right angles to each other in a plane parallel to the plane of the annular parts (11') and (11''), and for measuring the moment about the vertical axis of symmetry of the force sensor (11).

10. Programmable folding robot for automatically folding sheet-type items according to one or more of Claims 6 to 9, characterised in that the annular parts (11'), (11'') of the force sensor (11) are identical, and in that, just like the vertical parts (25), they have rectangular cross-sections, and in that four vertical parts (25) of equal length distributed symmetrically over the periphery of the annular parts (11') and (11'') are provided.

11. Programmable folding robot for automatically folding sheet-type items according to one or more of Claims 6 to 10, characterised in that the construction which can position the device (5) comprises a horizontally mobile device (7) on which one end of a swing arm (6) which rotates about said end in a vertical plane is fixed, while a carriage (9) which can travel in the lengthwise direction of the swing arm (6) is provided on said swing arm (6), on which carriage a mechanism (10), comparable to a wrist joint, is fixed, which mechanism can make its outgoing part rotate about two separate axes (β and Φ) relative to the part of the mechanism (10) fitted on the carriage (9), one axis (Φ) extending in a direction at right angles to the direction in which the other axis (β) extends, while a device (5) for gripping a sheet-type item is fixed on said outgoing part of the mechanism (10).

12. Programmable folding robot for automatically folding sheet-type items according to one or more of Claims 6 to 11, characterised in that the mobile device (7) is provided with slippers (12) which can glide over horizontally extending guides (13), and in that the drive takes place by means of a gear wheel (14) which meshes in a toothed bar (15), which is fixed opposite the gear wheel (14) against a fixed part and extends over the whole possible path of the device (7).

13. Programmable folding robot for automatically folding sheet-type items according to one or more of Claims 6 to 12, characterised in that the swing arm (6) has an angle-forming ending part (6'), in that the end of said part (6') is fixed rotatably on the carriage (7) by means of the shaft (18), said part (6') extending downwards from the shaft (18) when the swing arm (6) is in the horizontal position, in that the drive unit (8) of the swing arm (6) is, on the one hand, rotatably fixed in a fixed point of the carriage (7) with a horizontal shaft (19) and, on the other, has a horizontal shaft (20) which can be adjusted by the drive unit (8) along an essentially linear path at different distances from the shaft (19), in that said shaft (20) is rotatably fixed on the bottom part of the angle of the swing arm (6), so that the drive unit (8) can make the swing arm (6) rotate in a vertical plane about the shaft (18), and can adjust it at a well-defined angle of inclination.

14. Programmable folding robot for automatically folding sheet-type items according to one or more of Claims 6 to 13, characterised in that a carriage (9) can travel on the top of the longest part of the swing arm (6), over virtually the entire length thereof, and in that the drive thereof is by means of a screw-nut combination (23), so that the carriage (9) can travel along an axis of movement (U) and can be adjusted at any desired place.

15. Programmable folding robot for automatically folding sheet-type items according to one or more of Claims 6 to 14, characterised in that the mechanism (10) which is fixed on the carriage (9) is constructed as a differential mechanism, and is driven by two independent motors (24') and (24'') which can make the outgoing part of the mechanism (10) rotate respectively about an axis (β) which is parallel to the direction of movement of the carriage (7) - the Z-axis - and about an axis (Φ) which is perpendicular to said first axis (β) and to the axis of movement (U) of the carriage (9).

16. Programmable folding robot for automatically folding sheet-type items according to one or more of Claims 6 to 15, characterised in that a force sensor (11) according to Claims 9 or 10 is fixed with its bottom annular part (11'') on the outgoing part of the mechanism (10), and in that the device (5) is fixed on the top part (11').

17. Programmable folding robot for automatically folding sheet-type items according to one or more of Claims 6 to 16, characterised in that the device for taking hold of sheet-type items is a gripper (5) with exchangeable clamping pieces (31), (32), (33).

18. Programmable device for automatically folding sheet-type items, characterised in that said device is provided with a folding robot (3) according to one or more of Claims 6 to 17, a folding machine (1) with reference post (2) and a supply and discharge device for the sheets, said machines being controlled by means of a programmable part, provided with the necessary programs and data to make these machines interact in such a way that the sheets fed in by the supply machine are picked up by the folding robot (3) in the reference post (2), where the folding robot (3) aligns the sheet independently, the folding robot (3) positions the sheet relative to the folding tools (4) of the folding machine (1), the sheet is followed during folding by the folding robot (3), without reference loss, the sheet is laid ready for each subsequent fold at the correct position relative to the folding tools (4) and, finally, the finished sheet is laid on the discharge machine.

19. Programmable device for automatically folding sheet-type items according to Claim 18, characterised in that the folding robot (3) is securely fixed to the front of the folding machine (1), while the direction of movement of the carriage (7) is parallel to the lengthwise direction of the folding tools (4).

## Patentansprüche

1. Methode zur Steuerung eines programmierbaren Falzroboters für die automatische Falzung von Foliewerkstücken, wobei der Roboter wenigstens eine Vorrichtung (5) zum Festhalten des Foliewerkstücks aufweist und diese Vorrichtung (5) mit verschieden einstellbaren Verschiebungswellen positioniert werden kann,
- wobei die Antriebseinheiten der Verschiebungswellen separat gesteuert werden, um den hochgekanteten Teil des Foliewerkstücks zu greifen, damit sich das Werkstück nicht verschieben kann und während der Falzung gestützt wird,
- und die Steuerung entsprechend dem principal der Wegsteuerung durch kontinuierliche Messung der Position der Falzwerkzeuge (4) während der Falzung erzielt wird, um die Bewegungen der Vorrichtung (5) mit den Bewegungen der Falzwerkzeuge (4) durch einen Steuerungsalgorithmus zu synchronisieren, dadurch gekennzeichnet, daß die Steuerung unter anderem durch aktive Ausgleichung während der Falzung erfolgt und wenigstens eine Kraft und/oder wenigstens ein Moment die zu messende Vorrichtung (5) belastet, woraufhin die Meßwerte in den programmierbaren Teil rückgespeist werden, in dem ein entsprechender Algorithmus ein oder mehr Antriebseinheiten so einstellt, daß die gemessene Last aufgehoben wird.

2. Methode gemäß Patentanspruch 1, dadurch gekennzeichnet, daß wenigstens eine Translationsbewegung und/oder wenigstens eine Rotation auf Höhe der Vorrichtung (5) ohne Bewegung einer der Verschiebungswellen möglich ist, indem eine Flexibilität auf Höhe der Vorrichtung (5) vorgesehen wird, während die Kräfte oder Momente, die diese Translationsbewegungen oder Rotationen verursachen, gemessen werden, um diese Meßwerte anschließend in den programmierbaren Teil des Falzroboters rückzuspeisen.

3. Methode gemäß einem oder mehreren der vorhergehenden Patentansprüche, dadurch gekennzeichnet, daß zwei Kräfte und ein Moment gemessen werden.

4. Methode gemäß einem oder mehreren der vorhergehenden Patentansprüche, dadurch gekennzeichnet, daß der Steuerungsalgorithmus für die Wegsteuerung auf einer theoretischen Verbindung zwischen der Kinematik einer oder mehrerer Verschiebungswellen und der Kinematik der Falzwerkzeuge (4) und/oder der Werkzeugform und/oder der Abmessungen des zu falzenden Foliewerkstücks beruht.

5. Methode gemäß einem oder mehreren der vorhergehenden Patentansprüche, dadurch gekennzeichnet, daß eine Geschwindigkeits- und Beschleunigungs-Optimalwertsteuerung in den Steuerungsalgorithmus der Wegsteuerung eingebaut ist oder die Steuerung nach dem Prinzip der 2ustandsgleichungen erfolgt, um Begleitungsfehler zwischen dem theoretisch vorgeschriebenen Weg und dem tatsächlich während der Falzung von der Vorrichtung (5) vollzogenen Weg zu vermeiden.

6. Programmierbarer Falzroboter zur automatischen Falzung von Foliewerkstücken unter Anwendung der Methode gemäß einem oder mehreren der Patentansprüche 1 bis 5, der folgendes umfaßt:
- wenigstens eine Vorrichtung (5) zum Festhalten eines Foliewerkstücks, wobei die Vorrichtung (5) mit unterschiedlichen Verschiebungswellen positioniert werden kann,
- einen programmierbaren Teil mit einem ersten Steuerungsalgorithmus zur Steuerung der Antriebseinheiten der Verschiebungswellen, damit die Vorrichtung (5) an einer bestimmten Stelle ein Foliewerkstück aufgreifen, es zu den Falzwerkzeugen (4) positionieren und anschließend das fertige Foliewerkstück an einer bestimmten Stelle ablegen kann, wobei der programmierbare Teil zudem einen Wegsteuerungsalgorithmus zur Steuerung der Antriebseinheiten aufweist, damit die Vorrichtung (5) den hochgekanteten Teil des Foliewerkstücks ohne Bezugsverlust während der Falzung begleiten und abstützen kann,
- ein Meßinstrument zur kontinuierlichen Messung der Position der Falzwerkzeuge (4) während der Falzung und zur Rückspeisung der Meßwerte in den Wegsteuerungsalgorithmus, um die Bewegungen der Vorrichtung (5) mit den Bewegungen der Falzwerkzeuge (4) zu synchronisieren,
dadurch gekennzeichnet, daß der programmierbare Teil einen Aktivausgleichungsalgorithmus zur Einstellung eines oder mehrerer Antriebseinheiten aufweist, um eine auf der Vorrichtung (5) gemessene Last zu beseitigen, und daß der Falzroboter ein Meßinstrument zumindest zur Messung einer Kraft und/oder eines Moments, die bzw. das die Vorrichtung (5) belastet, und zur Rückspeisung dieser Werte an den Aktivausgleichungsalgorithmus aufweist.

7. Programmierbarer Falzroboter zur automatischen Falzung von Foliewerkstücken gemäß Patentanspruch 6, dadurch gekennzeichnet, daß die Vorrichtung (5) eine Flexibilität aufweist oder auf einem Element (11) montiert ist, das eine Flexibilität aufweist, die eine Translationsbewegung der Vorrichtung (5) in wenigstens eine Richtung und/oder eine Rotation um wenigstens eine Achse zu den anderen Teilen des programmierbaren Falzroboters zuläßt, und daß die Vorrichtung (5) oder das Element (11) ein Meßinstrument zur Messung der Kräfte und/oder Momente aufweist, die die obengenannten Translationsbewegungen und/oder Rotationen verursachen, sowie Mittel zur Rückspeisung dieser Meßwerte in den programmierbaren Teil.

8. Programmierbarer Falzroboter zur automatischen Falzung von Foliewerkstücken gemäß Patentanspruch 6 oder 7, dadurch gekennzeichnet, daß die Vorrichtung (5) zum Greifen eines Foliewerkstücks mit einem Kraftsensor (11) an dem Austritt der letzten Verschiebungswelle angeschlossen ist, daß dieser Kraftsensor (11) durch seine ihm eigene Flexibilität eine Translationsbewegung der Vorrichtung (5) zum Austritt der letzten Verschiebungswelle in zwei Richtungen in rechten Winkeln zueinander (U-Achse und Z-Achse) ermöglicht und daß der Kraftsensor durch die ihm eigene Flexibilität eine Rotation der Vorrichtung (5) zum Austritt der letzten Verschiebungswelle um eine Achse (Φ) in rechten Winkeln zu der Ebene der obengenannten Richtungen ermöglicht.

9. Programmierbarer Falzroboter zur automatischen Falzung von Foliewerkstücken gemäß einem oder mehreren der Patentansprüche 6, 7 und 8, dadurch gekennzeichnet, daß der Kraftsensor (11) ein ringförmiges Oberteil (11') und ein ringförmiges Unterteil (11'') umfaßt, die über verlängerte vertikale Teile (25) aus flexiblem Material in paralleler Position zueinander und übereinander befindlich verbunden sind, und daß das ringförmige Unterteil (11'') kontaktsicher am herausführenden Teil der letzten Verschiebungswelle (10) befestigt ist, während das Oberteil (11') kontaktsicher an der Vorrichtung (5) befestigt ist und Längungsmeßgeräte an den vertikalen Teilen (25) zur Messung von Kräften in beiden Richtungen in rechten Winkeln zueinander in einer parallel zu der Ebene der ringförmigen Teile (11') und (11'') verlaufenden Ebene sowie zur Messung des Moments um die vertikale Symmetrieachse des Kraftsensors (11) angebracht sind.

10. Programmierbarer Falzroboter zur automatischen Falzung von Foliewerkstücken gemäß einem oder mehreren der Patentansprüche 6 bis 9, dadurch gekennzeichnet, daß die ringförmigen Teile (11'), (11'') des Kraftsensors (11) identisch sind, daß sie wie die vertikalen Teile (25) rechteckige Querschnitte aufweisen und daß vier vertikale Teile (25) gleicher Länge symmetrisch auf dem Umfang der ringförmigen Teile (11') und (11'') verteilt sind.

11. Programmierbarer Falzroboter zur automatischen Falzung von Foliewerkstücken gemäß einem oder mehreren der Patentansprüche 6 bis 10, dadurch gekennzeichnet, daß die Konstruktion, die die Vorrichtung (5) positionieren kann, eine horizontal bewegliche Vorrichtung (7) umfaßt, auf der ein Ende eines Schwenkarms (6) befestigt ist, das um dieses Ende in einer vertikalen Ebene rotiert, während sich auf diesem Schwenkarm (6) ein Laufwerk (9) befindet, das sich in der Längsrichtung des Schwenkarms (6) verschieben läßt, auf dessen Laufwerk ein mit einem Drehgelenk vergleichbarer Mechanismus (10) befestigt ist, dessen austretender Teil um zwei separate Achsen (β und Φ) zu dem Teil des Mechanismus (10) rotiert, der auf dem Laufwerk (9) befestigt ist, wobei eine Achse (Φ) in einer Richtung in rechten Winkeln zu der Richtung verläuft, in der die andere Achse (β) verläuft, und wobei eine Vorrichtung (5) zum Greifen eines Foliewerkstücks an dem austretenden Teil des Mechanismus (10) befestigt ist.

12. Programmierbarer Falzroboter zur automatischen Falzung von Foliewerkstücken gemäß einem oder mehreren der Patentansprüche 6 bis 11, dadurch gekennzeichnet, daß die bewegliche Vorrichtung (7) Gleitstücke (12) aufweist, die über die horizontal verlaufenden Führungen (13) gleiten können, und daß der Antrieb über ein Zahnrad (14) erfolgt, das in eine gezahnte Stange (15) eingreift, die an der gegenüberliegenden Seite des Zahnrades (14) gegen einen feststehenden Teil befestigt ist und sich über den gesamt möglichen Weg der Vorrichtung (7) erstreckt.

13. Programmierbarer Falzroboter zur automatischen Falzung von Foliewerkstücken gemäß einem oder mehreren der Patentansprüche 6 bis 12, dadurch gekennzeichnet, daß der Schwenkarm (6) ein winkelbildendes Endteil (6') aufweist, daß das Ende dieses Teils (6') mit der Welle (18) rotierbar an dem Laufwerk (7) befestigt ist und von der Welle (18) abwärts verläuft, wenn sich der Schwenkarm (6) in horizontaler Position befindet, daß einerseits die Antriebseinheit (8) des Schwenkarms (6) rotierbar an einem festen Punkt des Laufwerks (7) mit einer horizontalen Welle (19) befestigt ist und andererseits eine horizontale Welle (20) aufweist, die mit der Antriebseinheit (8) entlang eines im wesentlichen linearen Weges in unterschiedlichen Abständen von der Welle (19) eingestellt werden kann, daß die Welle (20) rotierbar am Unterteil des Winkels des Schwenkarms (6) befestigt ist, so daß die Antriebseinheit (8) den Schwenkarm (6) in vertikaler Ebene um die Welle (18) zum Rotieren bringt und ihn auf einen bestimmten Neigungswinkel einstellt.

14. Programmierbarer Falzroboter zur automatischen Falzung von Bechwerkstücken gemäß einem oder mehreren der Patentansprüche 6 bis 13, dadurch gekennzeichnet, daß ein Laufwerk (9) oben auf dem längsten Teil des Schwenkarms (6), praktisch über die gesamte Länge dieses Schwenkarms, laufen kann und daß es sich bei der Antriebseinheit dieses Laufwerks um eine Schraubenmutterverbindung (23) handelt, so daß sich das Laufwerk (9) entlang einer Bewegungsachse (U) bewegen und auf jede gewünschte Stelle eingestellt werden kann.

15. Programmierbarer Falzroboter zur automatischen Falzung von Foliewerkstücken gemäß einem oder mehreren Patentansprüchen 6 bis 14, dadurch gekennzeichnet, daß der Mechanismus (10), der auf dem Laufwerk (9) befestigt ist, aus einem Differentialgetriebe besteht und von zwei unabhängigen Motoren (24') und (24'') angetrieben wird, die den austretenden Teil des Mechanismus (10) jeweils um eine Achse (β), die parallel zu der Bewegungsrichtung des Laufwerks (7), der Z-Achse, verläuft, und um eine Achse (Φ), die vertikal zu der ersten Achse (β) und zu der Bewegungsachse (U) des Laufwerks (9) verläuft, rotieren lassen.

16. Programmierbarer Falzroboter zur automatischen Falzung von Foliewerkstücken gemäß einem oder mehreren der Patentansprüche 6 bis 15, dadurch gekennzeichnet, daß ein Kraftsensor (11) gemäß Patentanspruch 9 oder 10 mit seinem ringförmigen Unterteil (11'') am austretenden Teil des Mechanismus (10) befestigt ist und daß die Vorrichtung (5) am Oberteil (11') befestigt ist.

17. Programmierbarer Falzroboter zur automatischen Falzung von Foliewerkstücken gemäß einem oder mehreren der Patentansprüche 6 bis 16, dadurch gekennzeichnet, daß es sich bei der Vorrichtung zum Festhalten der Foliewerkstücke um einen Greifer (5) mit auswechselbaren Klemmteilen (31), (32), (33) handelt.

18. Programmierbare Vorrichtung zur automatischen Falzung von Foliewerkstücken, dadurch gekennzeichnet, daß diese Vorrichtung mit einem Falzroboter (3) gemäß einem oder mehreren Patentansprüchen 6 bis 17, einer Falzmaschine (1) mit Bezugsposten (2) und einer Zufuhr- und Ausgabemaschine für die Foliewerkstücke bestückt ist, wobei diese Maschinen von einem programmierbaren Teil gesteuert werden, der mit den Programmen und Daten ausgestattet ist, die erforderlich sind, damit diese Maschinen interaktiv funktionieren, und zwar so, daß die von der Zufuhrmaschine eingeführten Foliewerkstücke von einem Falzroboter (3) im Bezugsposten (2) aufgegriffen werden, wo der Falzroboter (3) das Foliewerkstück selbständig ausrichtet und zu den Falzwerkzeugen (4) der Falzmaschine (1) positioniert, wobei das Foliewerkstück während der Falzung von dem Falzroboter (3) begleitet wird, ohne den Bezugspunkt zu verlieren, und wobei das Foliewerkstück jeweils für die folgende Falzung in korrekter Position zu den Falzwerkzeugen (4) bereitgelegt und als fertiges Foliewerkstück auf der Ausgabemaschine abgelegt wird.

19. Programmierbare Vorrichtung zur automatischen Falzung von Foliewerkstücken gemäß Patentanspruch 18, dadurch gekennzeichnet, daß der Falzroboter (3) kontaktsicher vorne an der Falzmaschine (1) befestigt ist, während die Bewegungsrichtung des Laufwerks (7) parallel zur Längsrichtung der Falzwerkzeuge (4) verläuft.

## Revendications

1. Procédé pour commander un robot programmable de pliage, pour le pliage automatique d'objets du type en feuille, ledit robot présentant au moins un dispositif (5) pour tenir un objet du type en feuille, et ledit dispositif (5) pouvant être positionné au moyen de différents arbres de déplacement ajustables,
- dans lequel les unités d'entraînement desdits arbres de déplacement sont commandées séparément en vue de saisir la partie en rabat supérieur d'un objet du type en feuille, de façon qu'elle ne puisse pas se décaler, et de la suivre en la soutenant pendant le pliage de cet objet,
- et dans lequel ladite commande est réalisée en fonction de la commande principale de trajet, en mesurant en continu la position des outils de pliage (4) pendant le pliage, pour synchroniser les déplacements du dispositif (5) avec les déplacements des outils de pliage (4), au moyen d'un algorithme de commande,
caractérisé en ce que ladite commande est également réalisée par déformation élastique active pendant le pliage, au moins une force et/ou au moins un couple exerçant une charge sur le dispositif (5) étant mesurés, tandis que cette ou ces valeurs mesurées sont réintroduites dans la partie programmable, où un algorithme adapté ajuste une ou plusieurs unités d'entraînement en vue de supprimer la charge mesurée.

2. Procédé selon la revendication 1, caractérisé en ce qu'au moins une translation et/ou au moins une rotation sont autorisées au niveau du dispositif (5) sans déplacement d'un des arbres de déplacement, en fournissant une flexibilité au niveau du dispositif (5), tandis que la ou les forces, ou le ou les couples provoquant cette ou ces translations, ou cette ou ces rotations, sont mesurés, en vue de réintroduire ces valeurs mesurées dans la partie programmable du robot de pliage.

3. Procédé selon l'une ou plusieurs des revendications précédentes, caractérisé en ce que deux forces et un couple sont mesurés.

4. Procédé selon l'une ou plusieurs des revendications précédentes, caractérisé en ce que l'algorithme de commande pour la commande de trajet est basé sur une connexion théorique entre la cinématique d'un ou de plusieurs arbres de déplacement et la cinématique des outils de pliage (4) et/ou la forme d'outil, et/ou les dimensions de la feuille de l'objet à plier.

5. Procédé selon l'une ou plusieurs des revendications précédentes, caractérisé en ce qu'une introduction de vitesse et d'une accélération est incorporée dans l'algorithme de commande pour la commande de trajet, ou la commande est réalisée selon le principe d'espace d'état, en vue d'éviter qu'une erreur de suivi se produise entre le trajet imposé par la théorie et le trajet suivi réellement par le dispositif (5) pendant le pliage.

6. Robot programmable de pliage pour le pliage automatique d'objets du type en feuille utilisant le procédé selon l'une ou plusieurs des revendications 1 à 5, comprenant:
- au moins un dispositif (5) pour tenir l'objet du type en feuille, ledit dispositif (5) pouvant être positionné au moyen de différents arbres de déplacement,
- une partie programmable pourvue d'un premier algorithme de commande pour commander les unités d'entraînement desdits arbres de déplacement, pour amener le dispositif (5) à saisir un objet du type en feuille en un emplacement prédéterminé, pour positionner celui-ci par rapport aux outils de pliage (4), et pour déposer l'objet fini en un emplacement prédéterminé; ladite partie programmable étant aussi pourvue d'un algorithme de commande de trajet pour commander lesdites unités d'entraînement en vue d'amener le dispositif (5) à suivre et soutenir la partie en rabat supérieur de l'objet sans perte de référence pendant le pliage,
- et des moyens pour mesurer la position des outils de pliage (4) en continu durant le pliage, et pour réintroduire les valeurs mesurées dans l'algorithme de commande de trajet, en vue de synchroniser les déplacements du dispositif (5) avec les déplacements des outils de pliage (4),
caractérisé en ce que la partie programmable est pourvue d'un algorithme de déformation élastique active pour l'ajustement d'une ou plusieurs unités d'entraînement, en vue de supprimer une charge mesurée sur le dispositif (5), et en ce que le robot de pliage est pourvu de moyens de mesure pour mesurer au moins une force et/ou au moins un couple exerçant une charge sur le dispositif (5), et pour réintroduire cette ou ces valeurs dans l'algorithme de déformation élastique active.

7. Robot programmable de pliage pour le pliage automatique d'objets du type en feuille selon la revendication 6, caractérisé en ce que le dispositif (5) présente une flexibilité ou est situé sur un élément (11) qui présente une flexibilité, de sorte qu'une translation du dispositif (5) dans au moins une direction et/ou une rotation au moins autour d'un axe est permise par rapport aux autres parties du robot programmable de pliage, et en ce que le dispositif (5) ou l'élément (11) est pourvu de moyens pour mesurer la ou les forces et/ou le ou les couples qui provoquent la ou les translations et/ou la ou les rotations mentionnées plus haut, et de moyens pour réintroduire ces valeurs mesurées dans la partie programmable.

8. Robot programmable de pliage pour le pliage automatique d'objets du type en feuille, selon la revendication 6 ou 7, caractérisé en ce que le dispositif (5) pour pincer un objet du type en feuille est relié au moyen d'un détecteur de force (11) à la sortie du dernier arbre de déplacement, en ce que, grâce à sa flexibilité intrinsèque, ledit détecteur de force (11) permet une translation du dispositif (5) par rapport à la sortie du dernier arbre de déplacement dans deux directions à angle droit l'une de l'autre (axe U et axe Z), et en ce que, grâce à sa flexibilité intrinsèque, ledit détecteur de force permet une rotation du dispositif (5) par rapport à la sortie du dernier arbre de déplacement autour d'un axe (Φ) situé à angle droit par rapport au plan des directions mentionnées ci-dessus.

9. Robot programmable de pliage pour le pliage automatique d'objets du type en feuille, selon l'une ou plusieurs des revendications 6, 7 et 8, caractérisé en ce que le détecteur de force (11) comprend une partie annulaire supérieure (11') et une partie annulaire inférieure (11'') reliées l'une à l'autre en position parallèle l'une au dessus de l'autre au moyen de parties verticales allongées (25) réalisées en matériau flexible, et en ce que la partie annulaire inférieure (11'') est attachée fixement à la partie sortante du dernier arbre (10) de déplacement, tandis que la partie supérieure (11') est attachée fixement au dispositif (5), et des jauges de contrainte sont fixées sur les parties verticales (25), pour mesurer des forces dans deux directions à angle droit l'une de l'autre dans un plan parallèle au plan des parties annulaires (11') et (11''), et pour mesurer le couple autour de l'axe vertical de symétrie du détecteur de force (11).

10. Robot programmable de pliage pour le pliage automatique d'objets du type en feuille selon l'une ou plusieurs des revendications 6 à 9, caractérisé en ce que les parties annulaires (11'), (11'') du détecteur de force (11) sont identiques, et en ce que, de même que les parties verticales (25), elles présentent des sections transversales rectangulaires, et en ce qu'il est prévu quatre parties verticales (25) d'égale longueur distribuées de façon symétrique à la périphérie des parties annulaires (11'), (11'').

11. Robot programmable de pliage pour le pliage automatique d'objets du type en feuille, selon une ou plus des revendications 6 à 10, caractérisé en ce que la construction qui peut positionner le dispositif (5) comprend un dispositif mobile horizontalement (7), sur lequel est fixée une extrémité d'un bras oscillant (6) qui tourne dans un plan vertical autour de ladite extrémité, tandis qu'un chariot (9), qui peut se déplacer dans la direction longitudinale du bras oscillant (6) est prévu sur ledit bras oscillant (6), un mécanisme (10), comparable à un raccord en poignet, étant fixé sur ledit chariot, ce mécanisme pouvant faire tourner sa partie sortante autour de deux axes séparés (β et Φ) par rapport à la partie du mécanisme (10) qui est installée sur le chariot (9), un axe (Φ) s'étendant dans une direction à angle droit par rapport à la direction dans laquelle s'étend l'autre axe (β), tandis qu'un dispositif (5) pour pincer un objet du type en feuille est fixé sur ladite partie sortante du mécanisme (10).

12. Robot programmable de pliage pour le pliage automatique d'objets du type en feuille, selon l'une ou plusieurs des revendications 6 à 11, caractérisé en ce que le dispositif mobile (7) est pourvu de glissières (12) qui peuvent glisser sur des guides (13) s'étendant horizontalement, et en ce que l'entraînement s'effectue au moyen d'une roue dentée (14) qui s'engrène dans une barre dentée (15) qui est fixée sur une partie fixe en face de la roue dentée (14) et qui s'étend sur tout le trajet possible du dispositif (7).

13. Robot programmable de pliage pour le pliage automatique d'objets du type en feuille, selon l'une ou plusieurs des revendications 6 à 12, caractérisé en ce que le bras oscillant (6) présente une partie d'extrémité formant un angle (6'), en ce que l'extrémité de ladite partie (6') est fixée à rotation sur le chariot (7) au moyen de l'arbre (18), ladite partie (6') débordant de l'arbre (18) en direction du bas quand le bras oscillant (6) est en position horizontale, en ce que l'unité d'entraînement (8) du bras oscillant (6) est d'une part fixée à rotation à un point fixe du chariot (7), par un arbre horizontal (19), et d'autre part présente un arbre horizontal (20) qui peut être ajusté par l'unité d'entraînement (8) à des distances différentes de l'arbre (19), le long d'un trajet essentiellement linéaire, en ce que ledit arbre (20) est fixé à rotation sur la partie inférieure de l'angle du bras oscillant (6), de telle sorte que l'unité d'entraînement (8) peut faire tourner le bras oscillant (6) dans un plan vertical autour de l'arbre (18), et peut l'ajuster à un angle d'inclinaison bien défini.

14. Robot programmable de pliage pour le pliage automatique d'objets du type en feuille, selon une ou plusieurs des revendications 6 à 13, caractérisé en ce qu'un chariot (9) peut se déplacer sur le haut de la partie la plus longue du bras oscillant (6), sur pratiquement la longueur totale de celui-ci, et en ce que son entraînement s'effectue au moyen d'une combinaison d'un écrou et d'une tige filetée (23), de telle sorte que le chariot (9) peut se déplacer le long d'un axe de déplacement (U) et peut être ajusté à n'importe quel emplacement souhaité.

15. Robot programmable de pliage pour le pliage automatique d'objets du type en feuille, selon l'une ou plusieurs des revendications 6 à 14, caractérisé en ce que le mécanisme (10) qui est fixé sur le chariot (9) est construit comme mécanisme différentiel, et est entrainé par deux moteurs indépendants (24') et (24'') qui peuvent faire tourner la partie sortante du mécanisme (10) respectivement autour d'un axe (β) qui est parallèle à la direction du déplacement du chariot (7) - l'axe Z - et autour d'un axe (Φ) qui est perpendiculaire audit premier axe (β) et à l'axe de déplacement (U) du chariot (9).

16. Robot programmable de pliage pour le pliage automatique d'objets du type en feuille, selon l'une ou plusieurs des revendications 6 à 15, caractérisé en ce qu'un détecteur de force (11) selon la revendication 9 ou 10 est fixé par sa partie inférieure annulaire (11'') sur la partie sortante du mécanisme (10), et en ce que le dispositif (5) est fixé sur la partie supérieure (11').

17. Robot programmable de pliage pour le pliage automatique d'objets du type en feuille, selon l'une ou plusieurs des revendications 6 à 16, caractérisé en ce que le dispositif pour tenir les objets du type en feuille est une pince (5) présentant des pièces de serrage (31), (32), (33) interchangeables.

18. Dispositif programmable pour le pliage automatique d'objets du type en feuille, caractérisé en ce que ledit dispositif est pourvue d'un robot de pliage (3) selon l'une ou plusieurs des revendications 6 à 17, d'une machine de pliage (1) avec un poste de référence (2) et d'un dispositif d'approvisionnement et de déchargement des feuilles, lesdites machines étant commandées au moyen d'une partie programmable pourvue des programmes et des données nécessaires pour faire interagir ces machines de telle sorte que les feuilles amenées par la machine d'approvisionnement sont saisies par le robot de pliage (3) dans le poste de référence (2) où le robot de pliage (3) aligne les feuilles indépendamment, le robot de pliage (3) positionnant la feuille par rapport aux outils de pliage (4) de la machine de pliage (1), la feuille étant suivie par le robot de pliage (3) pendant le pliage, sans perte de référence, la feuille prête pour chaque pliage ultérieur étant posée dans une position correcte par rapport aux outils de pliage (4), et finalement, la feuille terminée étant posée sur la machine de déchargement.

19. Dispositif programmable pour le pliage automatique d'objets du type en feuille, selon la revendication 18, caractérisé en ce que le robot de pliage (3) est attaché fixement sur l'avant de la machine de pliage (1), tandis que la direction de déplacement du chariot (7) est parallèle à la direction longitudinale des outils de pliage (4).
